**Europäisches Patentamt**

**European Patent Office**

**Office européen des brevets**

(11) Veröffentlichungsnummer : **0 329 937 B1**

(12) **EUROPÄISCHE PATENTSCHRIFT**

(45) Veröffentlichungstag der Patentschrift :
**29.04.92 Patentblatt 92/18**

(51) Int. Cl.⁵ : **F16C 13/00**

(21) Anmeldenummer : **89100560.5**

(22) Anmeldetag : **13.01.89**

(54) **Walze.**

(30) Priorität : **20.02.88 DE 3805323**

(43) Veröffentlichungstag der Anmeldung :
**30.08.89 Patentblatt 89/35**

(45) Bekanntmachung des Hinweises auf die
Patenterteilung :
**29.04.92 Patentblatt 92/18**

(84) Benannte Vertragsstaaten :
**GB IT**

(56) Entgegenhaltungen :
**DE-A- 3 138 365**
**DE-A- 3 710 724**

(73) Patentinhaber : **Eduard Küsters**
**Maschinenfabrik GmbH & Co. KG**
**Gladbacher Strasse 457**
**W-4150 Krefeld 1 (DE)**

(72) Erfinder : **Küsters, Karl-Heinz**
**Hermann-Schuhmacher Strasse 49**
**W-4150 Krefeld-Forstwald (DE)**

(74) Vertreter : **Palgen, Peter, Dipl.-Phys. Dr.**
**Mulvanystrasse 2**
**W-4000 Düsseldorf (DE)**

EP 0 329 937 B1

Jouve, 18, rue Saint-Denis, 75001 PARIS

## Beschreibung

Die Erfindung bezieht sich auf eine Walze der dem Oberbegriff des Anspruchs 1 entsprechenden Art.

Bei der aus der DE-B 22 30 139 bekannten Ausführungsform einer durchbiegungsgesteuerten Walze sind mehrere Stützstempel in einer Reihe am Querhaupt auf der Seite des Walzspalts angeordnet und können unabhängig voneinander mit Druckflüssigkeit beaufschlagt werden. Die Stützstempel wirken auf diese Weise mit wählbaren Kräften, die zu einer bestimmten Liniendruckverteilung führen, gegen den Innenumfang der Hohlwalze, wobei sich das Querhaupt innerhalb der Hohlwalze unter der Wirkung der Gegenkräfte durchbiegen kann.

Während die Hohlwalze bei der Ausführungsform nach der DE-B-22 30 139 an den Enden auf dem Querhaupt gelagert ist, zeigt die DE-B-22 54 392 eine entsprechende Walze mit sogenanntem "innerem Hub", bei der sich die Hohlwalze gegenüber dem Querhaupt radial verlagern kann und an den Enden nur auf einem Führungsring gelagert ist, der seinerseits gegenüber dem Querhaupt in einer Geradführung radial verschiebbar, ansonsten aber undrehbar ist.

Bei praktischen Ausführungsformen füllt das Querhaupt den Innenraum der Hohlwalze weitgehend aus. Es steht also für das Querhaupt kein allzu großer radialer Verlagerungsweg zur Verfügung. Bei Überschreitung einer bestimmten Verlagerung können Schäden auftreten, die es durch eine Hubbegrenzung der Stützstempel zu vermeiden gilt.

Bei Walzen, bei denen die Hohlwalzen an den Enden auf dem Querhaupt gelagert sind, findet natürlich an diesen Enden keine radiale Verlagerung von Querhaupt und Hohlwalze statt, sondern nur in der Mitte, wo sich das Querhaupt durch die Durchbiegung entgegen der Kraft der mittleren Stützelemente zur anderen Seite hin wegbiegt. Bei Walzen mit innerem Hub kann sich jedoch das Querhaupt auf der ganzen Länge verlagern.

Die Schäden, die bei zu großer Verlagerung auftreten können, entstehen durch Berührung des Innenumfangs der Hohlwalze durch die biegeäußere Seite des Querhaupts. Dadurch wird die Oberfläche des Innenumfangs der Hohlwalze beschädigt. Auch können Schäden dadurch entstehen, daß ein Stützstempel zu weit aus seiner Zylinderausnehmung herausgerät. Schließlich können bei Walzen mit innerem Hub die Gegenwalzen oder entsprechenden von der Walze gestützten Elemente in unzuträglichem Maß verlagert werden.

Es sind bereits Einrichtungen bekannt, mittels deren das Querhaupt in einer gewünschten Sollposition gehalten werden kann. Bei der DE-C-30 26 865 wird die Lage des Walzenmantels gegenüber dem Querhaupt gemessen und die Druckgabe auf die einzelnen Stützelemente entsprechend beeinflußt. Ähnlich funktioniert auch die Walze nach der DE-B-28 49 253. Es handelt sich um eine Walze mit innerem Hub, bei der zwischen dem Führungsring und dem Querhaupt ein Ventil ausgebildet ist, welches bei Überschreitung einer bestimmten Verlagerung des Führungsrings den Druck in der Zuleitung zu den einzelnen Stützelementen abfallen läßt. Bei der Walze nach der DE-A-29 43 644 wirkt ein entsprechendes Ventil auf einen Steuerdruck, der seinerseits den Druck in äußeren Belastungseinrichtungen der Walze erniedrigt, wenn die Verlagerung zwischen Querhaupt und Hohlwalze zu groß wird.

Allen bekannten Ausführungsformen ist gemeinsam, daß sie aufwendig sind und mittels gesteuerter Ventilanordnungen der den diversen Stützelementen zugeleitete Druck beeinflußt wird. Die Sicherheit kann hierbei nur so groß sein wie die Funktionsfähigkeit der Ventilanordnungen.

Der Erfindung liegt die Aufgabe zugrunde, bei einer gattungsgemäßen Walze die Hubbegrenzung einfacher und sicherer zuwege zu bringen.

Diese Aufgabe wird durch die in Anspruch 1 wiedergegebene Erfindung gelöst.

Durch den Kanal bricht der Druck unter dem kolbenartigen Stützstempel sofort zusammen, wenn dieser einen gewissen Grenzhub, der aus den Dimensionen der Hohlwalze und des Querhaupts sowie der Stützstempel errechnet werden kann, überschreitet und die Einmündung des Kanals freigibt. Es bedarf für diese Art der Hubbegrenzung keiner Ventil- oder Steuerelemente, sondern es erfolgt die Begrenzung auf die einfachst-mögliche Weise ohne Einschaltung mechanisch beweglicher oder gar elektrischer Teile. Die Anbringung eines Kanals der geschilderten Art ist bei Walzen mit und ohne inneren Hub möglich, obwohl das Hauptanwendungsgebiet bei den Walzen mit innerem Hub liegen wird, da bei diesen das Problem der übermäßigen radialen Verlagerung der Hohlwalze gegenüber dem Querhaupt größer ist.

In den Ansprüchen 1 und 2 sind alternative Ausführungsformen der fertigungstechnischen Herstellung des Kanals angegeben.

In der Zeichnung ist ein Ausführungsbeispiel der Erfindung dargestellt.

Fig. 1 zeigt eine Seitenansicht einer erfindungsgemäßen Walze, teilweise im Längsschnitt;

Fig. 2 zeigt eine vergrößerte Einzeldarstellung gemäß Fig. 1 im Längsschnitt.

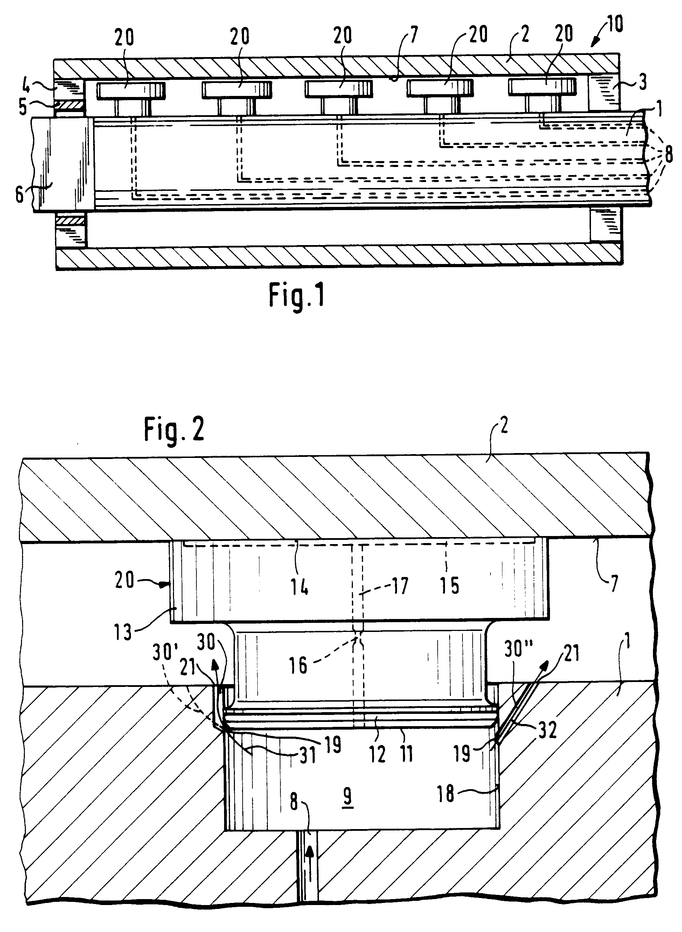

Die in Fig. 1 als Ganzes mit 10 bezeichnete Walze umfaßt ein feststehendes Querhaupt 1 und eine dieses mit Abstand umgebende und um es umlaufende Hohlwalze 2. Für die Führung der Hohlwalze 2 an dem Querhaupt 1 gibt es zwei Möglichkeiten. In der rechten Hälfte der Fig. 1 ist angedeutet, daß die Hohlwalze 2 auf Lagern 3 unmittelbar auf dem Querhaupt gelagert ist und sich also an den Enden gegenüber dem Querhaupt 1 radial nicht verlagern kann. In der linken Hälfte der Fig. 1 ist das dortige Ende der Hohlwalze 2 über ein Lager 4 auf einem Führungsring 5 gelagert, dessen innere Öffnung nicht kreisrund, sondern parallel begrenzt ist und auf dem abgeflachten Ende 6 des Querhauptes nach oben und unten gleitend sich verlagern kann. Diese Art der Führung ergibt eine Walze mit sogenanntem innerem Hub, d.h. es kann die Hohlwalze 2 nur durch innerhalb der Walze 10 befindliche Mittel, d.h. bei feststehendem Querhaupt 1, einen Hub ausführen.

Der Walzspalt ist bei dem Ausführungsbeispiel der Fig. 1 oben gelegen, und es sind in Zylinderausnehmungen des Querhaupts 1 innerhalb der Hohlwalze 2 fünf in gleichen Abständen in einer Reihe auf der Seite des Walzspalts gelegene Stützstempel 20 vorgesehen, die gegen den Innenumfang 7 der Hohlwalze 2 anliegen und die durch hydraulischen Druck, der jedem Stützstempel 20 über separate Leitungen 8 zugeführt wird, mit vorbestimmbarer Kraft angedrückt werden können. Dadurch stellt sich eine bestimmte Liniendruckverteilung ein.

In Fig. 2 sind die Verhältnisse an einem einzelnen Stützstempel 20 wiedergegeben. In der Oberseite des Querhauptes 1 sind die Zylinderausnehmungen 9 angebracht, in die die zugeordnete Zuleitung 8 einmündet und in der der kolbenartige Stützstempel mit seinem Unterteil 11, welches durch eine Ringdichtung 12 nach Art eines Kolbenrings abgedichtet ist, eintaucht. Der Kopf 13 des Stützstempels 20 ist mit seiner Anlagefläche 14 dem Innenumfang 7 der Hohlwalze 2 entsprechend geformt und weist in der Anlagefläche 14 hydrostatische Kammern 15 auf, die aus der Zylinderkammer 9 über eine mit einer Drosselstelle 16 versehene Bohrung 17 mit hydraulischer Druckflüssigkeit versorgt werden können. Der Stützstempel 20 stützt sich also über ein hydrostatisches Druckpolster gegen den Innenumfang 7 der Hohlwalze 2 ab, wobei durch die Anordnung der hydrostatischen Kammern 15 dafür Sorge getroffen werden kann, daß sich an den Rändern der Anlagefläche ein Druckflüssigkeitsfilm aufrechterhält und eine metallische Anlage vermieden wird.

Wenn in die Zylinderkammer 9 über die Leitung 8 Druck gegeben wird, übt der Stützstempel 20 gegen den Innenumfang 7 der Hohlwalze 2 eine gemäß Fig. 2 nach oben gerichtete Kraft aus.

Um eine zu große Verlagerung der Hohlwalze 2 gegenüber dem Querhaupt 1 gemäß Fig. 2 nach oben zu verhindern bzw. den Hub des Stützstempels 20 zu begrenzen, ist auf der gemäß Fig. 2 linken Seite des Stützstempels 20 ein Kanal 30 vorgesehen, der normalerweise, d.h. wenn der Stützstempel 20 tiefer als dargestellt in die Zylinderkammer 9 eintaucht, durch den Fuß 11 des Stützstempels 20 bzw. die Dichtung 12 verschlossen und für die Druckflüssigkeit in der Zylinderkammer 9 nicht erreichbar ist. Erst wenn der Stützstempel 20 die in Fig. 2 wiedergegebene Grenzhubstellung erreicht, wird die Einmündung 19 des Kanals 30 freigegeben, so daß Druckflüssigkeit im Sinne des Pfeiles 31 aus der Zylinderkammer 9 entweichen kann und der Druck in dieser sofort zusammenbricht, so daß der Stützstempel 20 nicht weiter ausfahren kann.

Der von der Wandung 18 der Zylinderkammer 9 zur Aussenseite des Querhauptes 1 führende Kanal 30 ist nur schematisch dargestellt. In der Praxis kann ein solcher Kanal auf verschiedene Weisen erzeugt werden. Eine Weise ist zum Beispiel eine parallel zur Achse der Zylinderkammer 9 bis in eine vorbestimmte Tiefe geführte Bohrung, die beim Ausdrehen der Zylinderkammer 9 angeschnitten wird. Eine andere Ausführungsform 30' besteht in einem in einer Axialebene der Zylinderkammer 9 in ihren oberen Rand eingebrachten Sägeschnitt 30'. Noch eine andere Ausführungsform ist eine Schrägbohrung 30'', die von einer Einmündung 19 in der Wandung 18 der Zylinderkammer 9 zu einer Ausmündung 21 auf der Oberseite des Querhaupts 1 führt und durch die die Druckflüssigkeit bei Freigabe der Einmündung 19 im Sinne des Pfeils 32 austreten kann. 30,30',30'' sind alternative Ausführungsformen des Kanals; normalerweise wird nur eine Art von Kanal bzw. nur ein Kanal vorhanden sein.

Maßgeblich ist allein, daß bei einer bestimmten Grenzhubhöhe des Stützelements ein Kanal 30,30',30'' freigegeben wird, der der unter Druck stehenden Flüssigkeit in der Zylinderkammer 9 eine Möglichkeit zum Abströmen eröffnet. Aus dieser Funktion ergibt sich auch die Bemessung des Querschnittes der Kanäle 30,30',30'': diese müssen im Verhältnis zur Menge der durch die Zuleitung 8 heranförderbaren Druckflüssigkeit bzw. zur Leistungsfähigkeit der Pumpe so abgestimmt sein, daß bei einer Freigabe der Einmündung der Kanäle in der Zylinderkammer 9 auch ein ausreichender Druckabfall stattfindet.

Es müssen nicht unbedingt alle Stützstempel 20 einer Walze 10 mit Kanälen 30,30',30'' versehen sein. In vielen Fällen sind mehr als die in Fig. 1 schematisch angegebenen fünf Stützstempel 20 vorhanden, von denen jeweils bestimmte Anzahlen gruppenweise mit einer gemeinsamen Zuleitung versehen sind. In einem solchen Fall kann es genügen, nur ein Stützelement 20 einer Gruppe mit einem Kanal 30, 30',30'' zu versehen. Auch können Strömungswächter vorgesehen sein, die auf eine plötzlich einsetzende Strömung in einer Zuleitung 8 reagieren (die durch das Abströmen der Druckflüssigkeit durch die Kanäle 30,30',30'' hervorgerufen wird, die dann den Druck in den anderen Stützelementen beeinflussen und/oder Anzeige- und/oder Alarmgeräte betätigen.

EP 0 329 937 B1

**Patentansprüche**

1. Walze zur Druckbehandlung von Warenbahnen, mit einer den arbeitenden Walzenumfang bildenden Hohlwalze (2), die der Länge nach von einem feststehenden, ringsum Abstand zum Innenumfang der Hohlwalze belassenden Querhaupt (1) durchgriffen ist,

mit gegen den Innenumfang (7) der Hohlwalze wirkenden hydraulischen Belastungseinrichtungen, über welche die Hohlwalze an dem Querhaupt abgestützt ist und die in mit Druckflüssigkeitszuleitungen (8) versehenen radialen Zylinderausnehmungen (9) im Querhaupt verlagerbare kolbenartige Stützstempel (20) umfassen, die mit ihrer Außenseite am Innenumfang der Hohlwalze anliegen und in der Außenseite hydrostatische Lagertaschen aufweisen,

und mit einer Einrichtung zur Begrenzung der Verlagerung der Hohlwalze gegenüber dem Querhaupt, dadurch gekennzeichnet,

daß die Einrichtung mindestens an einem der Stützstempel (20) einen den Raum unter dem Stützstempel (20) in der Zylinderausnehmung (9) unmittelbar mit der Außenseite des Querhaupts (1) verbindenden Kanal (30,30',30") umfaßt, dessen Einmündung (19) von dem Stützstempel (20) normalerweise verschlossen, bei einem Grenzhub jedoch freigebbar ist.

2. Walze nach Anspruch 1, dadurch gekennzeichnet, daß der Kanal durch eine Ausfräsung (30,30') im oberen Bereich der Zylinderwandung (18) gegeben ist.

3. Walze nach Anspruch 1, dadurch gekennzeichnet, daß der Kanal (30") durch eine von der Zylinderwandung (18) auf die Außenseite des Querhaupts (1) führende Schrägbohrung (32) gegeben ist.


**Revendications**

1. Rouleau pour le traitement sous pression de bandes de feuilles comprenant :

un rouleau creux (2) constituant le pourtour du rouleau moteur, rouleau (2) qui est dans le sens de sa longueur pénétré par une traverse (1) fixe, ménageant tout autour un intervalle par rapport au pourtour intérieur du rouleau creux,

des dispositifs de charge hydrauliques agissant contre le pourtour intérieur (7) du rouleau creux, dispositifs par l'intermédiaire desquels le rouleau creux s'appuie sur la traverse et qui comprennent des poinçons d'appui (20) en forme de pistons pouvant se déplacer dans des évidements cylindriques (9) pratiqués radialement dans la traverse et pourvus de canalisations d'arrivée (8) de liquide sous pression, poinçons qui reposent par leur côté extérieur sur le pourtour intérieur du rouleau creux et présentent sur le côté extérieur des poches d'appui hydrostatiques

et un dispositif pour limiter le déplacement du rouleau creux par rapport à la traverse, rouleau caractérisé en ce que

le dispositif comprend au moins sur l'un des poinçons d'appui (20) un canal (30, 30', 30") reliant directement au côté extérieur de la traverse (1) l'espace se trouvant sous le poinçon d'appui (20) dans l'évidement cylindrique (9), canal dont l'embouchure (19) est normalement fermée par le poinçon d'appui (20), mais peut être toutefois libérée lors d'un soulèvement limite.

2. Rouleau selon la revendication 1, caractérisé en ce que le canal est réalisé par un fraisage (30, 30') dans la zone supérieure de la paroi cylindrique (18).

3. Rouleau selon la revendication 1, caractérisé en ce que le canal (30") est réalisé par un perçage oblique (32) allant de la paroi cylindrique (18) au côté extérieur de la traverse (1).


**Claims**

1. A roller for the pressure treatment of fabric webs,

having a shell (2) effective as the operative roller periphery, a stationary beam (1) extending through the shell (2) lengthwise thereof and leaving a peripheral gap between itself and the shell inner periphery, and

having hydraulic loading means which are effective towards the shell inner periphery (7), the same bearing on the beam by way of the latter means which comprise piston-like thrust rams (20) displaceable in radial cylinder recesses (9) in the beam (1), the recesses being associated with pressure liquid supply lines (8), the rams (20) engaging by way of their outside with the shell inside periphery (7) and having hydrostatic bearing pockets in the outside, and

having means for limiting displacement of the shell relatively to the beam, characterised in that

4

the displacement-limiting means comprise at least on one of the thrust rams (20) a duct (30, 30', 30") which directly connects to the outside of the beam (1) the space below the thrust ram (20) in the cylinder recess (9), the entry orifice (19) of the duct normally being kept closed by the thrust ram (20) but being openable in response to a limiting stroke.

2. A roller according to claim 1, characterised in that the duct is in the form of a recessing (30, 30') in the top zone of the cylinder wall (18).

3. A roller according to claim 1, characterised in that the duct (30") is devised in the form of an inclined bore (32) which extends from the cylinder wall (18) to the outside of the beam (1).

Fig.1

Fig. 2